# EUROPEAN PATENT APPLICATION

(11) **EP 4 818 266 A1**
(43) Date of publication of application: **07.10.2026**
(21) Application number: 24897700.1
(22) Date of filing: 29.11.2024
(51) Int. Cl.: C08L 101/00, C08F 220/10, C08K 3/013, C08L 33/04, C08L 63/00, C09K 23/52

(54) **POLYMERIC ADDITIVE**

(30) Priority: 30.11.2023 JP 2023202821
(71) Applicant: Sekisui Chemical Co., Ltd., Osaka-shi, Osaka 530-8565 (JP)
(72) Inventor: FUKUMOTO, Michitaka, Mishima-gun, Osaka 618-0021 (JP); KAGE, Yuuto, Mishima-gun, Osaka 618-0021 (JP); ISHIDA, Keiichi, Mishima-gun, Osaka 618-0021 (JP); KANMURI, Shuhei, Mishima-gun, Osaka 618-0021 (JP); ISHIDA, Hiroya, Mishima-gun, Osaka 618-0021 (JP); ASOH, Takato, Mishima-gun, Osaka 618-0021 (JP)
(74) Representative: Ter Meer und Partner mbB
(86) International application number: PCT/JP2024/042348
(87) International publication number: WO 2025/116018

(57) **Abstract**

The polymeric additive of the present invention has an aromatic ring in a side chain or at an end of a polymer main chain; and at least one reactive functional group in a molecular structure thereof, the polymeric additive having a maximum fluorescence peak in a range of 370 nm or more and 410 nm or less, and the polymeric additive having a total Hansen solubility parameter δₜₒₜ of 17 or more and 24 or less as represented by the following expression: $δ tot = \sqrt{\left({δ}_{d}^{2}+{δ}_{p}^{2}+{δ}_{h}^{2}\right)}$ wherein δ_{d}, δₚ, and δₕ represent a dispersion term, a polar term and a hydrogen bond term, respectively, of Hansen solubility parameter. The present invention can provide a polymeric additive that is highly soluble in a medium- to high-polarity solvent and in a resin such as an epoxy resin, an acrylic resin, or a urethane resin, and that is capable of enhancing the dispersibility of a π-conjugated filler in the solvent and the resin.

## Description

### Technical Field

The present invention relates to a polymeric additive.

### Background Art

In recent years, thermal management has become critical for electronic devices due to increased heat generation from highly integrated circuits, driving demand for heat-dissipating materials. The heat-dissipating materials are generally formed from resin compositions containing resin and fillers.

For example, boron nitride, graphite, and carbon black are each known as a filler having a 6-membered ring structure with a π-electron-conjugated system (hereinafter also referred to as a π-conjugated filler) and used in various applications, including an ink and a resin composite.

Since the π-conjugated filler has low affinity for a solvent and a resin, however, an additive is generally used to improve the affinity. A polymeric additive is often used, particularly to improve dispersibility of the filler.

The polymeric additive is generally composed of a functional group that interacts with a filler (hereinafter also referred to as a "filler linker") and a polymer main chain. PTL1 describes an invention relating to a filler dispersant using an acrylic polymer. The dispersant described in PTL1 has an ionic functional group as the filler linker. A dispersant having an ionic functional group (such as an amine, a carboxylic acid, or a phosphoric acid) exhibits a dispersion effect by binding to functional groups present on a side surface, an edge, or the other surfaces of the filler. However, for a π-conjugated filler having surfaces without functional groups, such as the (001) plane of boron nitride, the reactivity is low, resulting in poor filler dispersion effects.

On the other hand, attempts have also been made to enhance the dispersibility of the π-conjugated filler with a polymeric additive having an aromatic ring by utilizing a π-π interaction.

PTL2 describes an invention relating to a nanocarbon dispersant having a specific repeating unit and discloses a nanocarbon dispersant having, in a structure thereof, an atomic group containing a functional group capable of interacting with nanocarbon and being adsorbed onto the surface of nanocarbon. An example of the functional group include a 1-pyrenyl group.

PTL3 discloses a norbornene-based ring-opening (co)polymer having a maximum absorption wavelength of 300 nm to 400 nm, and specifically, an example thereof includes a polymer containing anthracene or pyrene.

PTL4 discloses an invention relating to a method for dispersing graphite-like nanoparticles using a dispersing aid based on a block copolymer, and an example thereof includes a compound having pyrene as the dispersing aid.

PTL5 discloses an invention relating to a conjugated polymer composed of specific repeating units, the conjugated polymer having a weight-average molecular weight of 20,000 or more and a dispersity (Mw/Mn) of 2.40 or less, and describes that the conjugated polymer may have, as a substituent, a benzene ring, a naphthalene ring, an anthracene ring, a phenanthrene ring, a perylene ring, a tetracene ring, a pyrene ring, and the like.

PTL6 discloses an invention relating to a nanofiller dispersant composition including (a) at least one halogenated copolymer containing units derived from an isoolefin having 4 to 7 carbon atoms and para-alkyl styrene, and at least one reaction product of a polycyclic aromatic hydrocarbon, and (b) at least one nanofiller, and describes anthracene, pyrene, benzopyrene, and the like as the polycyclic aromatic hydrocarbon.

### Citation List

### Patent Literature

PTL1: JP 6965703 B
PTL2: JP 2012-82120 A
PTL3: JP 2009-46615 A
PTL4: JP 2012-520224 A
PTL5: JP 2014-218669 A
PTL6: JP 2018-537548 A

### Summary of Invention

### Technical Problem

However, polymeric additives that have conventionally been used exhibit low solubility in medium- to high-polarity solvents (for example, toluene, 2-propanol, and methyl ethyl ketone) as well as in resins (for example, various monomers that form epoxy resins, acrylic resins, and urethane resins), and, for example, precipitation has occurred in some cases. Furthermore, it is difficult for the conventional additives to improve the dispersibility of π-conjugated fillers in the solvents and resins, thus leaving room for improvement.

Therefore, an object of the present invention is to provide a polymeric additive that is highly soluble in a medium- to high-polarity solvent and in a resin such as an epoxy resin and that is capable of improving the dispersibility of a π-conjugated filler in such a solvent.

### Solution to Problem

As a result of extensive studies, the present inventors have found that the above object can be achieved using a polymeric additive having an aromatic ring and at least one reactive functional group, the polymeric additive having a maximum fluorescence peak in a range of 370 nm or more and 410 nm or less, and a total Hansen solubility parameter δₜₒₜ of 17 or more and 24 or less, thereby the present invention has been completed.

More specifically, the present invention relates to [1] to [12] below.
[1] A polymeric additive comprising:
   an aromatic ring in a side chain or at an end of a polymer main chain; and
   at least one reactive functional group in a molecular structure thereof, the polymeric additive having a maximum fluorescence peak in a range of 370 nm or more and 410 nm or less, and the polymeric additive having a total Hansen solubility parameter δₜₒₜ of 17 or more and 24 or less as represented by the following expression: $δ tot = \sqrt{\left({δ}_{d}^{2}+{δ}_{p}^{2}+{δ}_{h}^{2}\right)}$
   wherein δ_{d}, δₚ, and δₕ represent a dispersion term, a polar term and a hydrogen bond term, respectively, of Hansen solubility parameter.
[2] The polymeric additive according to [1], wherein the polar term δp of the Hansen solubility parameter is 0.5 or more and 19 or less.
[3] The polymeric additive according to [1] or [2], wherein the aromatic ring comprises a fused-ring compound in which four or more 6-membered rings are fused.
[4] The polymeric additive according to [3], wherein the number of fused-ring compounds is 1 or more and 5 or less per polymer chain.
[5] The polymeric additive according to any one of [1] to [4], wherein the reactive functional group comprises any one selected from the group consisting of a hydroxy group, an acid anhydride group, and a trialkoxysilyl group.
[6] The polymeric additive according to any one of [1] to [5], wherein a number-average molecular weight (Mn) as measured by GPC is 4,000 or more and 100,000 or less.
[7] The polymeric additive according to any one of [1] to [6], comprising two maximum peaks of UV absorption in a range of 320 nm or more and 350 nm or less.
[8] The polymeric additive according to any one of [1] to [7], wherein the polymer main chain comprises (meth)acrylate.
[9] The polymeric additive according to any one of [1] to [8], comprising an alkyl group having 1 or more and 22 or less carbon atoms in the molecular structure thereof.
[10] A filler-containing composition comprising:
   the polymeric additive according to any one of [1] to [9];
   a filler; and
   a matrix that is at least one of a resin or a solvent.
[11] The filler-containing composition according to [10], wherein the filler is a thermally conductive filler.
[12] The filler-containing composition according to [10] or [11], wherein the resin comprises a curable resin and the curable resin comprises an epoxy compound.

### Advantageous Effects of Invention

The present invention can provide a polymeric additive that is highly soluble in a medium- to high-polarity solvent and in a resin such as an epoxy resin and that is capable of improving the dispersibility of a π-conjugated filler in such a solvent.

### Description of Embodiments

### [Polymeric additive]

The polymeric additive of the present invention has an aromatic ring in a side chain or at an end of a polymer main chain; and at least one reactive functional group in a molecular structure thereof, the polymeric additive having a maximum fluorescence peak in a range of 370 nm or more and 410 nm or less, and the polymeric additive having a total Hansen solubility parameter δₜₒₜ of 17 or more and 24 or less as represented by the following expression: $δ tot = \sqrt{\left({δ}_{d}^{2}+{δ}_{p}^{2}+{δ}_{h}^{2}\right)}$ wherein δ_{d}, δₚ, and δₕ represent a dispersion term, a polar term and a hydrogen bond term, respectively, of Hansen solubility parameter.

The polymeric additive of the present invention, owing to the above configuration, exhibits improved solubility in a medium- to high-polarity solvent as well as improved solubility in a resin. As used herein, the term "solubility in a resin" refers to the compatibility between the polymeric additive and a cured resin. When the polymeric additive exhibits good compatibility with the cured resin, the solubility in the resin is considered good.

In the present invention, the polymeric additive is required to have excellent solubility in both a medium- to high-polarity solvent and a resin. For example, being soluble in both the medium- to high-polarity solvent and the resin facilitates preparation of a slurry including a composite material made from a resin and a filler without impairing various physical properties after curing of the resin.

### <Aromatic ring>

The polymeric additive of the present invention has an aromatic ring in a side chain or at an end of a polymer main chain. The presence of an aromatic ring in the polymeric additive facilitates an π-π interaction with a π-conjugated filler. Such a π-π interaction between the polymeric additive and the filler enhance the dispersibility of the filler. As used herein, the π-conjugated filler refers to a filler having structural units composed of atomic 6-membered ring systems, such as boron nitride, graphite, and carbon black.

The aromatic ring contained in the polymeric additive preferably include a fused-ring compound in which a plurality of aromatic rings (6-membered rings) are fused. By containing such a fused-ring compound, the polymeric additive more readily undergoes a π-π interaction with a π-conjugated filler, thereby enhancing the dispersibility of the filler.

Examples of the fused-ring compound include naphthalene, anthracene, phenanthrene, triphenylene, pyrene, tetracene, picene, perylene, pentaphene, pentacene, and hexaphene. The fused-ring compound may have at least one hydrogen atom composing the compound replaced with a substituent. Examples of the substituent include an organic group having 1 to 10 carbon atoms.

Among them, from the viewpoint of enhancing the dispersibility of the π-conjugated filler, the fused-ring compound contained in the polymeric additive is preferably a fused-ring compound in which four or more 6-membered rings are fused. Further, among such fused-ring compounds in which four or more six-membered rings are fused, pyrene is particularly preferred from the viewpoint of enhancing the solubility of the polymeric additive in medium-to high-polarity solvents.

The number of fused-ring compounds is preferably 1 or more and 5 or less per polymer chain of the polymeric additive. When the number of fused-ring compounds is 1 or more, the polymeric additive readily interacts with a π-conjugated filler, thereby enhancing dispersibility. When the number of fused-ring compounds is 5 or less, self-aggregation of the polymeric additive is suppressed, resulting in enhanced solubility in a solvent and a resin.

The number of fused-ring compounds is more preferably 1 or more and 3 or less per polymer chain, and still more preferably 1.

### <Reactive functional group>

The polymeric additive of the present invention has at least one reactive functional group in a molecular structure thereof. With this reactive functional group, the polymeric additive readily reacts or interacts with a resin, thereby enhancing solubility in the resin. The type of reactive functional group contained in the polymeric additive is not particularly limited, and any reactive functional group that readily reacts or interacts with the resin may be selected.

The reactive functional group preferably includes one or more selected from the group consisting of a trialkoxysilyl group, a vinyl group, an acid anhydride group, a carboxyl group, an amino group, a hydroxy group, an isocyanate group, a urethane group, an oxazoline group, an oxetane group, a cyanate group, a phenolic group, a hydrazide group, and an amide group. Among these, the reactive functional group is preferably any one selected from the group consisting of a hydroxy group, an acid anhydride group, and a trialkoxysilyl group, and among these, a hydroxy group is more preferred. Note that the trialkoxysilyl group is preferably a trimethoxysilyl group.

### <Alkyl group>

The polymeric additive of the present invention preferably has an alkyl group having 1 or more and 22 or less carbon atoms in the molecular structure thereof. From the viewpoint of adjusting the total Hansen solubility parameter described later to a desired range, the alkyl group is preferably an alkyl group having 6 or more and 18 or less carbon atoms, and more preferably an alkyl group having 8 or more and 18 or less carbon atoms. Specific examples of the alkyl group include a hexyl group, a heptyl group, an octyl group, a nonyl group, a decyl group, an undecyl group, a dodecyl group, a pentadecyl group, and an octadecyl group (stearyl group), among which a dodecyl group and an octadecyl group (stearyl group) are preferred, and an octadecyl group (stearyl group) is more preferred.

### <Structure of polymeric additive>

The polymer main chain of the polymeric additive of the present invention is not particularly limited, but preferably contains (meth)acrylate. More specifically, the polymeric additive of the present invention is preferably a polymer including a structural unit derived from (meth)acrylate. As used herein, the term "(meth)acrylate" refers to acrylate or methacrylate, and similar terms are to be interpreted in the same manner.

The polymeric additive of the present invention is preferably a polymer represented by the following general formula (1), the polymer including a structural unit derived from (meth)acrylate.

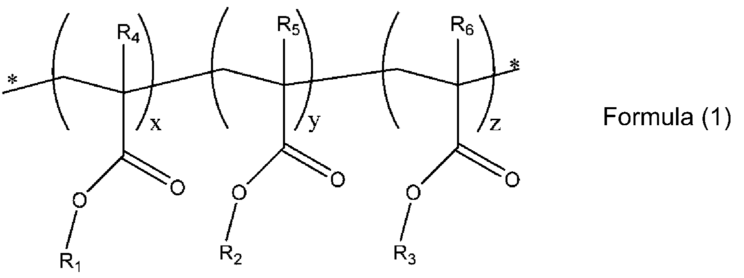

In formula (1), R₁ is an alkyl group having 1 or more and 22 or less carbon atoms, R₂ is a group containing a reactive functional group, and R₃ is a group containing an aromatic ring. R₄ to R₆ are each independently a hydrogen atom or methyl group. x represents the number of units having R₁ (hereinafter, also referred to as "alkyl group-containing unit(s)") and is 10 or more and 200 or less. y represents the number of units having R₂ (hereinafter, also referred to as "reactive group-containing unit(s)") and is 5 or more and 50 or less. z represents the number of units having R₃ (hereinafter, also referred to as "aromatic ring-containing unit(s)") and is 1 or more and 5 or less. The asterisks (*) shown at both ends represent atomic bonds, and * usually bonds to a group (generally an organic group having 1 to 20 carbon atoms) derived from a reagent such as a polymerization initiator used in the production of the polymer represented by formula (1).

The polymeric additive represented by formula (1) is composed of an alkyl group-containing unit, a reactive group-containing unit, and an aromatic ring-containing unit, and the units may be connected in a block manner or may be connected randomly.

The Hansen solubility parameter δₜₒₜ can be adjusted by the number of the respective units. For example, by decreasing the number of alkyl group-containing units and/or increasing the number of reactive group-containing units, the total Hansen solubility parameter δₜₒₜ and the polar term δp of the Hansen solubility parameter can be adjusted to higher values.

From the viewpoint of adjusting the total Hansen solubility parameter described later to a desired range, R₁ is preferably an alkyl group having 6 or more and 18 or less carbon atoms, and more preferably an alkyl group having 8 or more and 18 or less carbon atoms. Specific examples of the alkyl group include a hexyl group, a heptyl group, an octyl group, a nonyl group, a decyl group, an undecyl group, a dodecyl group, a pentadecyl group, and an octadecyl group (stearyl group), among which a dodecyl group and an octadecyl group (stearyl group) are preferred, and an octadecyl group (stearyl group) is more preferred.

R₂ is a group containing a reactive functional group, and the reactive functional group is as described above. Specifically, the reactive functional group preferably includes one or more selected from the group consisting of a trialkoxysilyl group, a vinyl group, an acid anhydride group, a carboxyl group, an amino group, a hydroxy group, an isocyanate group, a urethane group, an oxazoline group, an oxetane group, a cyanate group, a phenolic group, a hydrazide group, and an amide group. Among them, the reactive functional group is preferably any one selected from the group consisting of a hydroxy group, an acid anhydride group, and a trialkoxysilyl group, among them, more preferably a hydroxy group. Note that the trialkoxysilyl group is preferably a trimethoxysilyl group.

R₃ is a group containing an aromatic ring. The aromatic ring is preferably a fused-ring compound, and examples of the fused-ring compound include naphthalene, anthracene, phenanthrene, triphenylene, pyrene, tetracene, picene, perylene, pentaphene, pentacene, and hexaphene, among which pyrene is preferred.

In formula (1), x is 10 or more and 200 or less, preferably, 20 or more and 100 or less, and still more preferably 30 or more and 60 or less.

In formula (1), y is 5 or more and 50 or less, preferably 6 or more and 30 or less, and more preferably 8 or more and 15 or less.

In formula (1), z is 1 or more and 5 or less, preferably 1 or more and 3 or less, and more preferably 1.

When x, y, and z are each in the above ranges, the total Hansen solubility parameter δₜₒₜ and the polar term δp of the Hansen solubility parameter described later can be readily adjusted to desired ranges.

From the viewpoint of enhancing solubility in medium- to high-polarity solvents and resins, as well as enhancing the dispersibility of a π-conjugated filler in such solvents and resins, the polymeric additive of the present invention is more preferably a polymer represented by formula (2).

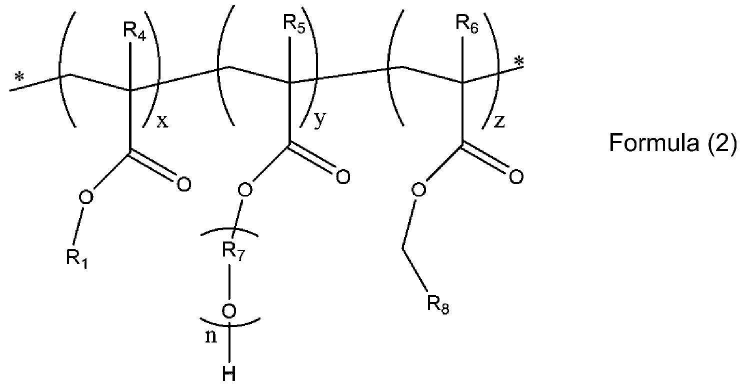

The polymeric additive represented by formula (2) is the same as that of formula (1), except that R₂ in formula (1) is "-(R₇-O)ₙ-H" and R₃ in formula (1) is "-CH₂-R₈". That is, R₁, R₄ to R₆, x, y, and z have the same meanings as defined in formula (1).

R₇ is an alkylene group having 2 to 4 carbon atoms, preferably an ethylene group. In addition, n represents the number of repetitions of the oxyalkylene group (R₇-O) and is from 1 to 50, preferably from 3 to 20, and more preferably from 6 to 12.

R₈ is a fused-ring compound, and examples thereof include naphthalene, anthracene, phenanthrene, triphenylene, pyrene, tetracene, picene, perylene, pentaphene, pentacene, and hexaphene, among which pyrene is preferred.

From the viewpoint of enhancing solubility in medium- to high-polarity solvents and resins, as well as enhancing the dispersibility of a π-conjugated filler in such solvents and resins, the polymeric additive of the present invention is still more preferably a polymer represented by formula (3).

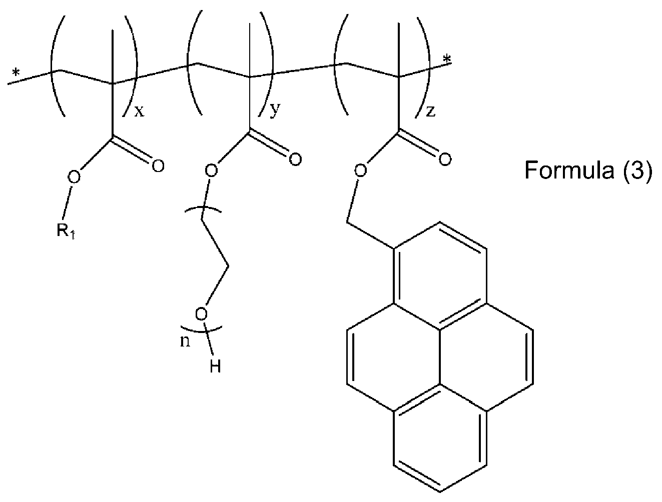

The polymeric additive represented by formula (3) is a polymeric additive in which R₄ to R₆ in formula (2) are each a methyl group, R₇ is an ethylene group, and R₈ is pyrene. R₁, x, y, and z have the same meanings as defined in formula (1).

The polymeric additive represented by formulas (1) to (4) can be obtained by polymerizing monomers (a) to (c) that form an alkyl group-containing unit, a reactive group-containing unit, and an aromatic ring-containing unit.

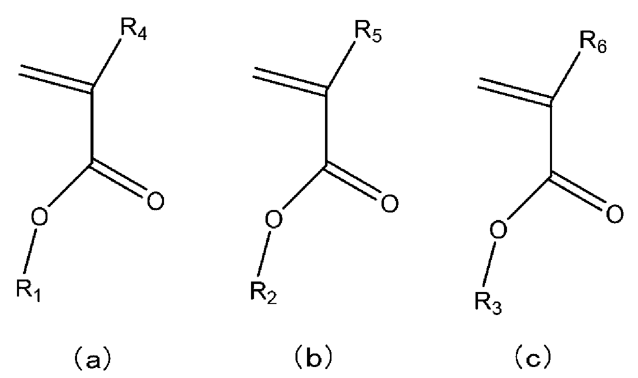

In the monomers (a) to (c), R₁ to R₆ have the same meanings as defined in formula (1).

As the polymerization method may be used any method for polymerizing a common acrylic monomer. However, from the viewpoint of appropriately adjusting the molecular weight of the polymeric additive and enhancing the solubility in a solvent and dispersibility of a filler, it is preferable to apply reversible addition-fragmentation chain transfer polymerization (RAFT polymerization).

When RAFT polymerization is applied, structures derived from a polymerization initiator and a RAFT reagent (chain transfer agent) used in the RAFT polymerization form the ends of the polymeric additive. That is, the asterisks (*) in formula (1) are preferably bonded to the structures derived from the polymerization initiator and the RAFT reagent (chain transfer agent) used in the RAFT polymerization. In this case, an example of a specific structure of the polymeric additive is as follows.

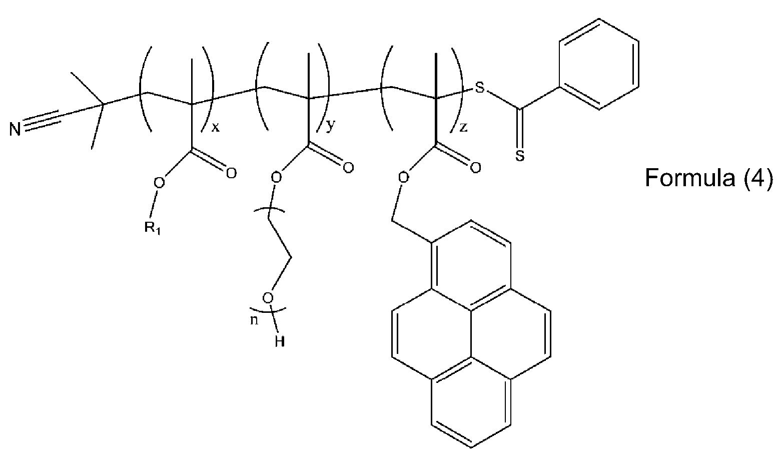

In formula (4), R₁ is as described in formula (1), and n is as described in formula (3).

### <Maximum fluorescence peak>

The polymeric additive of the present invention has a maximum fluorescence peak in a range of 370 nm or more and 410 nm or less. The maximum fluorescence peak within the above range facilitates interaction with the π-conjugated filler and suppression of stacking of aromatic rings in a fused-ring compound or the like. As a result, the polymeric additive has improved solubility and dispersibility in a solvent and resin.

The maximum fluorescence peak is in a range of preferably 380 nm or more and 410 nm or less, more preferably 390 nm or more and 410 nm or less, and still more preferably 395 nm or more and 405 nm or less.

The maximum fluorescence peak can be adjusted depending on the type of aromatic ring contained in the polymeric additive.

The maximum fluorescence peak can also be measured according to the method described in Examples.

### <Hansen solubility parameter>

The polymeric additive of the present invention has a total Hansen solubility parameter δₜₒₜ of 17 or more and 24 or less as represented by the following expression: $δ tot = \sqrt{\left({δ}_{d}^{2}+{δ}_{p}^{2}+{δ}_{h}^{2}\right)}$ wherein δ_{d}, δₚ, and δₕ represent a dispersion term, a polar term and a hydrogen bond term, respectively, of Hansen solubility parameter.

The total Hansen solubility parameter δₜₒₜ refers to the square root of the sum of squares of three Hansen solubility parameters (HSP), namely the dispersion term, the polar term, and the hydrogen bond term.

When the polymeric additive has a total Hansen solubility parameter δₜₒₜ of 17 or more and 24 or less, the polymeric additive has enhanced solubility in a medium- to high-polarity solvent. The Hansen solubility parameter δ is preferably 17 or more and 22 or less, and more preferably 18 or more and 20 or less.

From the viewpoint of enhancing the solubility of the polymeric additive in a medium-to high-polarity solvent, the polar term δp of the Hansen solubility parameter is preferably 0.5 or more and 19 or less, more preferably 1 or more and 10 or less, and still more preferably 2 or more and 6 or less.

In general, the solubility parameter of Hildebrand, known as the SP value (δ), is based on the assumption that the forces acting between a solvent and a solute are solely intermolecular forces. In contrast, the Hansen solubility parameters (HSP) express solubility in a three-dimensional space consisting of a dispersion term δd, a polar term δp, and a hydrogen bond term δh. The dispersion term δd represents the effect of dispersion forces, the polar term δp represents the effect of dipole-dipole interactions, and the hydrogen bond term δh represents the effect of hydrogen-bonding forces.

The definition and calculation of the Hansen solubility parameters are described in Charles M. Hansen, Hansen Solubility Parameters: A Users Handbook (CRC Press, 2007). The Hansen solubility parameters can also be conveniently estimated using the computer software Hansen Solubility Parameters in Practice (HSPiP).

The total Hansen solubility parameter δₜₒₜ of the polymeric additive is expressed by the above expression and determined by performing a test for measuring the solubility using a solvent with known Hansen solubility parameters (HSP). The details are as described in Examples.

### <Molecular weight>

The number-average molecular weight of the polymeric additive of the present invention is not particularly limited, but is preferably 4,000 or more and 100,000 or less. When the number-average molecular weight of the polymeric additive is 4,000 or more, the filler tends to have enhanced dispersibility. When the number-average molecular weight of the polymeric additive is 100,000 or less, the polymeric additive has enhanced solubility in a medium- to high-polarity solvent and resin such as epoxy resin.

The number-average molecular weight of the polymeric additive is more preferably 6,000 or more and 30,000 or less, and still more preferably 8,000 or more and 15,000 or less.

The number-average molecular weight of the polymeric additive can be measured by gel permeation chromatography (GPC), which is a value expressed in terms of standard polystyrene.

### <Ultraviolet (UV) absorption>

The polymeric additive of the present invention preferably has two maximum peaks of ultraviolet (UV) absorption in a range of 320 nm or more and 350 nm or less when the UV absorption spectrum is measured. A polymeric additive having two maximum peaks of UV absorption within such a specific wavelength range tends to enhance the dispersibility of π-conjugated fillers, and also to have increased solubility in a medium- to high-polarity solvent.

The UV absorption spectrum of the polymeric additive can be adjusted depending on the type of aromatic ring contained in the polymeric additive, such as a fused aromatic ring.

### <Application>

The polymeric additive of the present invention can be suitably used as a dispersant for various fillers.

The filler is not particularly limited, but is, from the viewpoint of use in heat-dissipating materials, preferably a thermally conductive filler, and examples thereof include aluminum, copper, nickel, aluminum oxide (alumina), magnesium oxide, zinc oxide, aluminum hydroxide, aluminum nitride, diamond, boron nitride, and a carbon-based material.

As used herein, the thermally conductive filler refers to a filler having thermal conductivity, and preferably a filler having a thermal conductivity of 10 W/m·K or more.

As described above, the polymeric additive of the present invention can satisfactorily disperse π-conjugated fillers. Accordingly, the polymeric additive of the present invention can be suitably used as a dispersant for π-conjugated fillers such as boron nitride and a carbon-based material. Examples of the boron nitride include boron nitride nanotubes, boron nitride nanosheets, and hexagonal boron nitride particles. Examples of the carbon-based material include graphite, carbon black, carbon fibers, and carbon nanotubes.

The average particle diameter of the filler is not particularly limited, but is, for example, from 1 to 100 µm, preferably from 1 to 50 µm, and more preferably from 1 to 10 µm. Note that the average particle diameter means a particle diameter (D50) at a cumulative volume of 50% in a particle size distribution of the insulating fine particles as determined by a laser diffraction/scattering method.

When the polymeric additive of the present invention is used as a dispersant for a filler, the amount of polymeric additive is preferably, for example, 0.5 to 10 parts by mass, more preferably 1 to 5 parts by mass, per 100 parts by mass of the filler.

The polymeric additive of the present invention has good solubility in a medium- to high-polarity solvent. Therefore, the polymeric additive can be suitably used for applications in which a filler is dispersed in a medium- to high-polarity solvent.

Examples of the medium- to high-polarity solvent include toluene, ethyl acetate, methyl ethyl ketone, tetrahydrofuran, acetone, cyclohexanone, n-propanol, 2-propanol, ethanol, and methanol.

The polymeric additive of the present invention can also be used for applications in which a filler is dispersed in a resin (matrix). Examples of the resin include a curable resin, a thermoplastic resin, and an elastomer resin. Examples of the curable resin include an epoxy resin, a silicone resin, a urethane resin, a phenolic resin, an unsaturated polyester resin, a polyimide resin, and an oxetane resin.

Examples of the thermoplastic resin include a polyolefin resin such as a polypropylene resin, a polyethylene resin, a poly(1-)butene resin, and a polypentene resin; a polyester resin such as polyethylene terephthalate; a polystyrene resin; an acrylonitrile-butadiene-styrene (ABS) resin; an ethylene-vinyl acetate copolymer (EVA); a (meth)acrylic resin; a polyamide resin; and a polyvinyl chloride resin (PVC).

Among the resins described above, a resin containing a curable resin is preferred. The curable resin preferably contains an epoxy resin. The epoxy resin preferably contains an epoxy compound and a curing agent.

Examples of the epoxy compound include a bisphenol A-type epoxy compound, a bisphenol F-type epoxy compound, a bisphenol S-type epoxy compound, a phenol novolac-type epoxy compound, a biphenyl-type epoxy compound, a biphenyl novolac-type epoxy compound, a biphenol-type epoxy compound, a naphthalene-type epoxy compound, a fluorene-type epoxy compound, a phenol aralkyl-type epoxy compound, a naphthol aralkyl-type epoxy compound, a dicyclopentadiene-type epoxy compound, an anthracene-type epoxy compound, an epoxy compound having an adamantane skeleton, an epoxy compound having a tricyclodecane skeleton, a naphthylene ether-type epoxy compound, and an epoxy compound having a triazine nucleus as a skeleton.

Examples of the curing agent include a phenol compound (phenol curing agent), an amine compound (amine curing agent), an imidazole compound, an acid anhydride, a cyanate ester compound, a carbodiimide compound, and an imide oligomer.

The imide oligomer is a compound having an imide skeleton in a main chain thereof, and is preferably a compound having an aromatic ring in the skeleton.

The imide oligomer has a reactive functional group at both molecular ends or at one molecular end, the reactive functional group being capable of reacting with the curable resin, and the reactive functional group is preferably an acid anhydride group, an amino group, or a hydroxyl group. The amino group is not particularly limited, and may be any of a primary amino group, a secondary amino group, and a tertiary amino group. The hydroxyl group may be a phenolic hydroxyl group or a hydroxyl group other than a phenolic hydroxyl group.

Examples of the elastomer resin include an acrylonitrile-butadiene rubber, an ethylene-propylene-diene rubber, an ethylene-propylene rubber, a natural rubber, a polybutadiene rubber, and a polyisoprene rubber. The elastomer resin may be a liquid elastomer that becomes liquid at room temperature (23 °C) and normal pressure (1 atm), a solid elastomer, or a mixture thereof.

The elastomer resin used may also be a thermoplastic elastomer such as a thermoplastic polyester elastomer, a thermoplastic polyurethane, or a styrenic thermoplastic elastomer.

The polymeric additive of the present invention also has high solubility in a monomer that forms a resin, such as an epoxy resin. Furthermore, the polymeric additive of the present invention has a reactive functional group, and readily reacts with a resin such as an epoxy resin, and can disperse a filler in the resin with good dispersibility.

For example, when the monomer that forms a resin such as an epoxy resin is mixed with a filler and the polymeric additive of the present invention in a medium- to high-polarity solvent, the polymeric additive exhibits good solubility in the monomer, and furthermore, the dispersibility of the filler in the solvent becomes good. Therefore, when the monomer in the solvent is polymerized to form a polymer, a filler/polymer composite having good dispersibility of the filler can be obtained. In particular, even when a π-conjugated filler is used as the filler, the use of the polymeric additive of the present invention makes it possible to produce a π-conjugated filler/polymer composite having good dispersibility of the π-conjugated filler. These filler/polymer composites have uniform physical properties such as thermal conductivity because of the excellent dispersibility of the filler, and also exhibit excellent relaxation of interfacial elastic modulus.

### <Resin composition>

The present invention can provide a resin composition containing the polymeric additive, a filler, and a matrix that is at least one of a resin and a solvent.

Note that specific examples of the resin, solvent, and filler are as described above.

### Examples

Hereinafter, the present invention will be illustrated with reference to specific Examples and Comparative Examples. However, the present invention is not limited to these Examples.

### [Molecular weight]

The number-average molecular weight of each polymeric additive was measured under the following conditions.

The measurement was performed using "ACQUITY APC system" manufactured by Waters as a GPC system, LF-604 6.0 × 150 mm as a column, and THF as a solvent liquid at a flow rate of 0.3 mL/min and a temperature of 40°C. A polystyrene standard was used as a standard sample.

### [Maximum fluorescence peak]

The fluorescence spectrum of each polymeric additive was measured. Specifically, the measurement was performed using "fluorescence spectrophotometer F-2700" manufactured by Hitachi High-Tech Science Corporation under the condition of an excitation wavelength of 339 nm for each polymeric additive sandwiched between slide glasses to have a thickness of 40 µm, thereby obtaining the fluorescence spectrum. The wavelength at which the intensity of the fluorescence spectrum reached the maximum was defined as the maximum fluorescence peak.

### [Maximum peak of ultraviolet (UV) absorption]

The UV absorption peak of each polymeric additive was measured using "spectrophotometer U-3900" manufactured by Hitachi High-Tech Science Corporation.

### [Total Hansen solubility parameter δₜₒₜ]

The solubility and dispersibility of each polymeric additive were evaluated by dissolving the polymeric additive in 25 solvents selected from the Master database, in which the Hansen solubility parameters (HSP) are confirmed.

The 25 solvents used and the Hansen solubility parameters (HSP) are as shown in Table 1.

Note that the units of the dispersion term δ_{d}, polar term δₚ, and hydrogen bond term δₕ are expressed in "MPₐ^{1/2}".

**Table 1**

| Solvent | HSP | | |
|---|---|---|---|
| | *δ*_{d} | *δ*ₚ | *δ*ₕ |
| Ethyl acetate | 15.8 | 5.3 | 7.2 |
| Acetone | 15.5 | 10.4 | 7.0 |
| Toluene | 18.0 | 1.4 | 2.0 |
| Tetrahydrofuran | 16.8 | 5.7 | 8.0 |
| Methanol | 14.7 | 12.3 | 22.3 |
| Ethanol | 15.8 | 8.8 | 19.4 |
| 2-Propanol | 15.8 | 6.1 | 16.4 |
| 2-Ethylhexanal | 15.9 | 3.3 | 11.8 |
| N-Methyl-2-pyrrolidone | 18.0 | 12.3 | 7.2 |
| Oleic acid | 16.0 | 2.8 | 6.2 |
| Water | 15.5 | 16.0 | 42.3 |
| Methyl ethyl ketone | 16.0 | 9.0 | 5.1 |
| Cyclohexanone | 17.8 | 6.3 | 5.1 |
| Diethylene glycol | 16.6 | 12.0 | 19.0 |
| 1,4-Dioxane | 17.5 | 1.8 | 9.0 |
| γ-Butyrolactone | 18.0 | 16.6 | 7.4 |
| Propylene carbonate | 20.0 | 18.0 | 4.1 |
| 1,2-Dibromobenzene | 20.7 | 6.5 | 5.3 |
| Phenyl acetate | 19.8 | 5.2 | 6.4 |
| Benzaldehyde | 19.4 | 7.4 | 5.3 |
| Benzyl alcohol | 18.4 | 6.3 | 13.7 |
| Diethyl carbonate | 16.6 | 3.1 | 6.1 |
| 2-Methyl-1-propanol | 15.1 | 5.7 | 15.9 |
| Acetylacetone | 16.1 | 11.2 | 6.2 |
| n-Hexane | 14.9 | 0.0 | 0.0 |

### (Evaluation of solubility and dispersibility)

The solubility and dispersibility of each polymeric additive were determined as follows.

Each polymeric additive was added to the respective solvents shown in Table 1 so that the concentration became 5% by mass, and stirred under the conditions of room temperature (25°C) for 30 minutes at 50 rpm using a mix rotor, model VMR-5R, manufactured by AS ONE Corporation. After stirring, the mixture was allowed to stand at room temperature (25°C) for 1 hour, and the solubility and dispersibility were evaluated based on the following criteria.
Score 1: dissolved, no precipitation
Score 2: dissolved, slight precipitation
Score 3: dissolved, precipitation in more than half
Score 4: dissolved, almost completely precipitated
Score 5: insoluble, completely precipitated

After determining the score for each solvent shown in Table 1, the HSP were estimated using the computer software Hansen Solubility Parameters in Practice (HSPiP).

Specifically, the Sphere program of HSPiP was activated to select each solvent used for the above evaluation of solubility and dispersibility in the program. Next, the score of each solvent determined by the above method was input into the program, and δₜₒₜ and δp were automatically calculated by executing the computation.

### <Evaluation of dispersibility>

A polymeric additive solution was prepared by adding 0.2 g of the polymeric additive of each Example and Comparative Example to 20 g of methyl ethyl ketone, followed by stirring. To this polymeric additive solution was added 0.2 g of boron nitride (UHP-1K, flake type, average particle size: 8 µm; manufactured by Showa Denko K.K.) as a filler, and the mixture was stirred at 100 rpm for 5 minutes using a planetary/ultrasonic nano-disperser "PR-1" (Thinky Corporation). Thereafter, the mixture was allowed to stand for 5 minutes and then hand-shaken to give a dispersion. The resulting dispersion was transferred to a centrifuge tube (Violamo, model VIO-50BN), and allowed to stand for 10 minutes. Then, the thickness of the precipitate was measured and evaluated according to the following criteria.

### (Evaluation criteria)

A: thickness of precipitate was 8 mm or less
B: thickness of precipitate was more than 8 mm and 9.5 mm or less
C: thickness of precipitate was more than 9.5 mm

### <Evaluation of solubility>

### Evaluation of solubility in 2-propanol

To 8 g of 2-propanol was added 0.4 g of the polymeric additive of each Example and Comparative Example, and the mixture was stirred to confirm the solubility of the polymeric additive. Specifically, a transmission spectrum of the polymeric additive solution was obtained using "spectrophotometer U-3900" manufactured by Hitachi High-Tech Science Corporation, and the transmittance at a wavelength of 600 nm was measured. The evaluation of solubility was performed at 25°C and evaluated according to the following criteria.

### (Evaluation criteria)

A: transmittance of 90% or more
B: transmittance of 50% or more and less than 90%
C: transmittance of less than 50%

### Evaluation of solubility in epoxy resin

A reaction solution was obtained by stirring and mixing 0.2 g of the polymeric additive of each Example and Comparative Example, 1.0 g of a bisphenol A-type epoxy resin (YD-127, manufactured by Nippon Steel Chemical & Material Co., Ltd.), 0.010 g of an imidazole-type curing accelerator (manufactured by Shikoku Chemicals Corporation), and 1.2 g of methyl ethyl ketone. Thereafter, 0.3 g of the solution was added dropwise onto a slide glass, formed into a sheet having a thickness of 140 µm, and dried at 100°C for 10 minutes. After drying, the sheet was sandwiched from above with another slide glass and cured at 150°C for 30 minutes and at 200°C for 90 minutes, and the solubility of the polymeric additive in the epoxy resin was evaluated. Specifically, the total light transmittance of the polymeric additive solution was measured using a "spectro-color haze meter COH 7700" manufactured by Nippon Denshoku Industries Co., Ltd., and the evaluation was performed according to the following criteria.

### (Evaluation criteria)

A: total light transmittance of 80% or more
B: total light transmittance of 70% or more and less than 80%
C: Total light transmittance of less than 70%

### <Example 1>

Into a reaction vessel equipped with a condenser were charged 0.3158 g of 1-pyrenylmethyl methacrylate, 11.5324 g of dodecyl methacrylate, 3.6446 g of polyethylene glycol methacrylate (Mn = 360), 0.1717 g of 2-cyanopropan-2-yl benzodithioate, 0.0317 g of 2,2'-azobis(isobutyronitrile), and 19.70 g of toluene, followed by stirring to mix the components. After the interior of the reaction vessel was purged with nitrogen, the mixture was heated with stirring to increase the temperature of the reaction vessel to 80°C, and the reaction was allowed to proceed for 17 hours. Thereafter, the reaction vessel was cooled with ice to terminate the reaction, thereby giving a copolymer solution. The resulting reaction solution was added dropwise to methanol and purified to give a polymeric additive represented by formula (5). The number-average molecular weight of the resulting polymeric additive was 15,360. The structure of the resulting polymeric additive is shown in Table 3. Note that the progress of the reaction was confirmed by ¹H-NMR measurement. The measurement was performed using a JEOL "ECX-400" NMR spectrometer under the following conditions: deuterated chloroform as the solvent, a sample concentration of 1 wt%, a temperature of 25°C, a measurement frequency of 400 MHz, and eight accumulated scans. The progress of the reaction in the other Examples and Comparative Examples was also confirmed by ¹H-NMR measurement in the same manner.

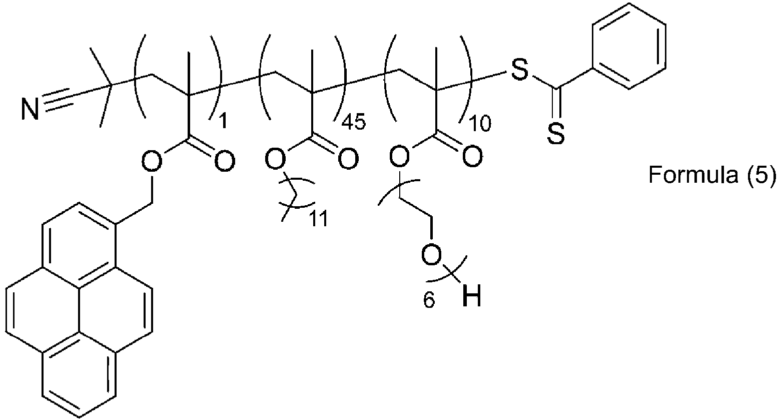

### <Example 2>

A polymeric additive represented by formula (7) was obtained in the same manner as in Example 1, except that in Example 1 the compound represented by formula (6) was used in place of 1-pyrenylmethyl methacrylate, no 2-cyanopropan-2-yl benzodithioate was used, and the blending amounts of the respective components were adjusted as shown in Table 2. Details of the resulting polymeric additive are shown in Table 3.

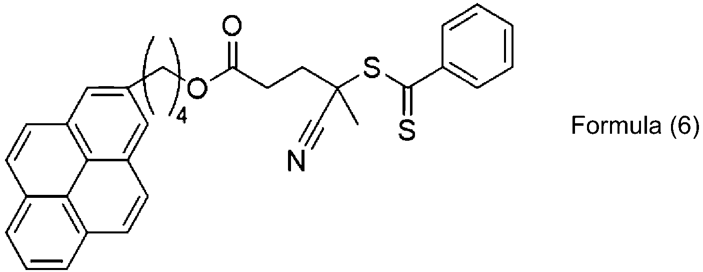

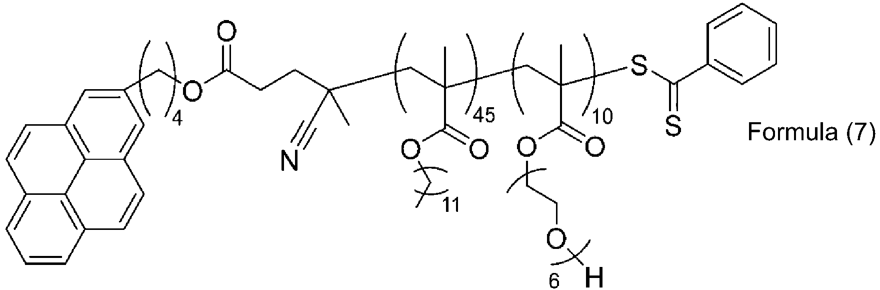

### <Example 3>

A polymeric additive represented by formula (8) was obtained in the same manner as in Example 1, except that the blending amounts of the respective components were adjusted as shown in Table 2. Details of the resulting polymeric additive are shown in Table 3.

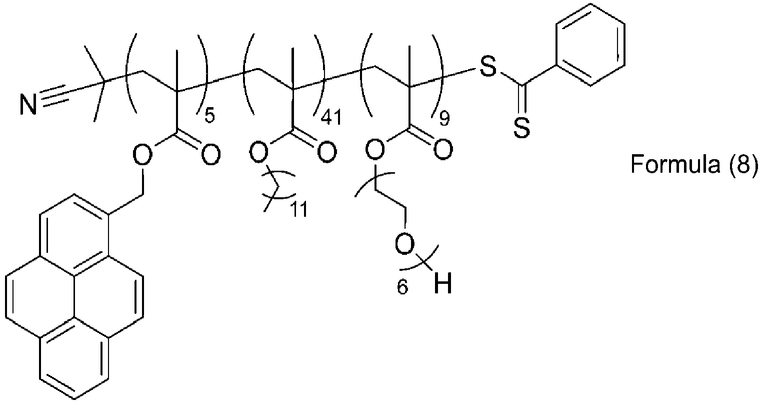

### <Example 4>

A polymeric additive represented by formula (9) was obtained in the same manner as in Example 1, except that in Example 1 propyl methacrylate was used in place of dodecyl methacrylate and the blending amounts of the respective components were adjusted as shown in Table 2. Details of the resulting polymeric additive are shown in Table 3.

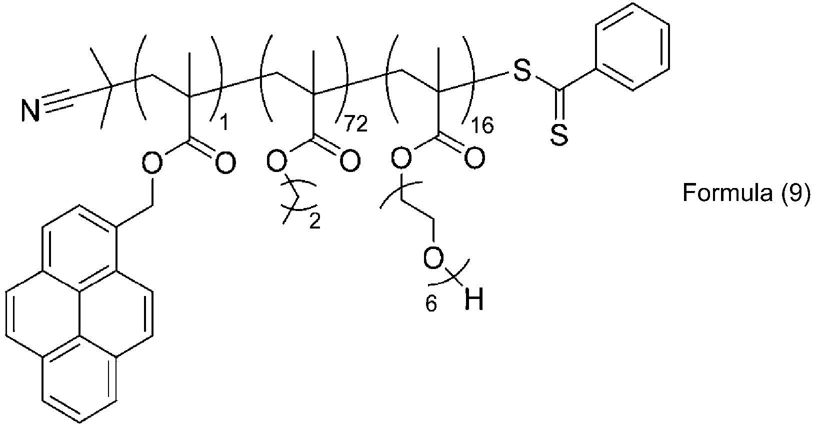

### <Example 5>

A polymeric additive represented by formula (10) was obtained in the same manner as in Example 1, except that the blending amounts of the respective components were adjusted as shown in Table 2. Details of the resulting polymeric additive are shown in Table 3.

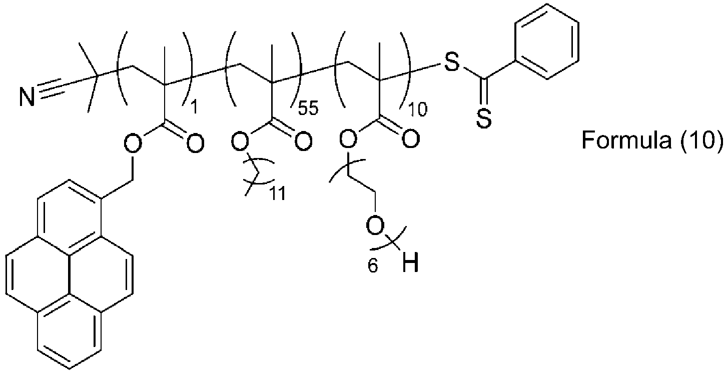

### <Example 6>

A polymeric additive represented by formula (11) was obtained in the same manner as in Example 1, except that the blending amounts of the respective components were adjusted as shown in Table 2. Details of the resulting polymeric additive are shown in Table 3.

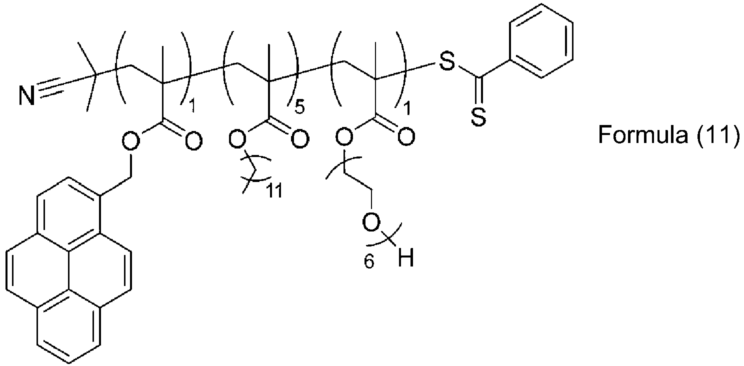

### <Example 7>

A polymeric additive represented by formula (12) was obtained in the same manner as in Example 1, except that the blending amounts of the respective components were adjusted as shown in Table 2. Details of the resulting polymeric additive are shown in Table 3.

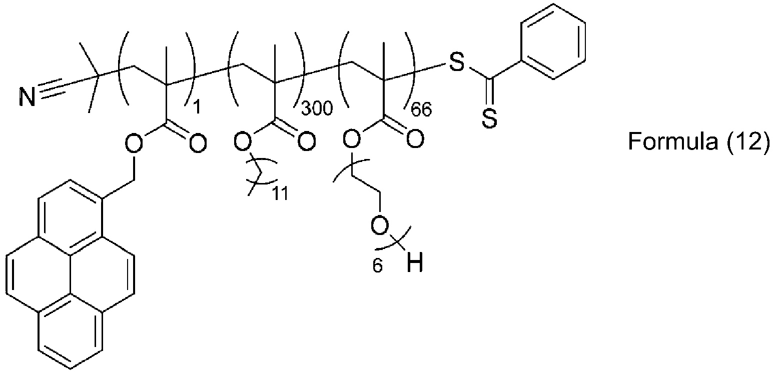

### <Example 8>

A polymeric additive represented by formula (20) was obtained in the same manner as in Example 1, except that in Example 1 stearyl acrylate was used in place of dodecyl methacrylate, 2-(methacryloyloxy)ethyl 1,3-dioxo-1,3-dihydroisobenzofuran-5-carboxylate was used in place of polyethylene glycol methacrylate, and the blending amounts of the respective components were adjusted as shown in Table 2. Details of the resulting polymeric additive are shown in Table 3.

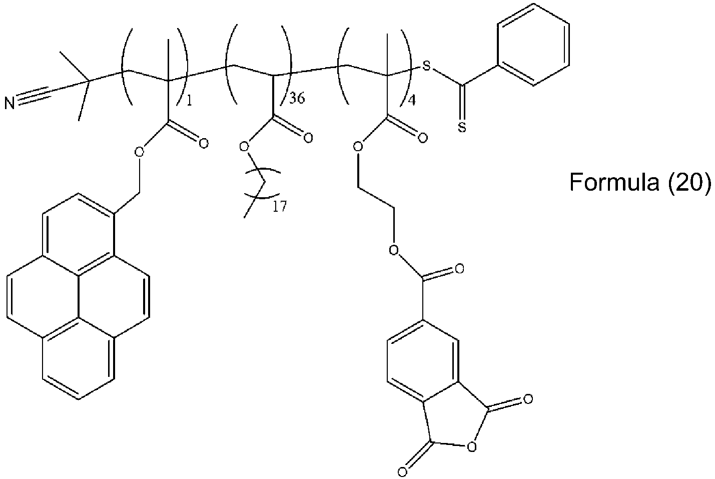

### <Example 9>

A polymeric additive represented by formula (21) was obtained in the same manner as in Example 8, except that in Example 8 3-(trimethoxysilyl)propyl methacrylate was used in place of 2-(methacryloyloxy)ethyl 1,3-dioxo-1,3-dihydroisobenzofuran-5-carboxylate, polyethylene glycol methacrylate was additionally used, and the blending amounts of the respective components were adjusted as shown in Table 2. Details of the resulting polymeric additive are shown in Table 3.

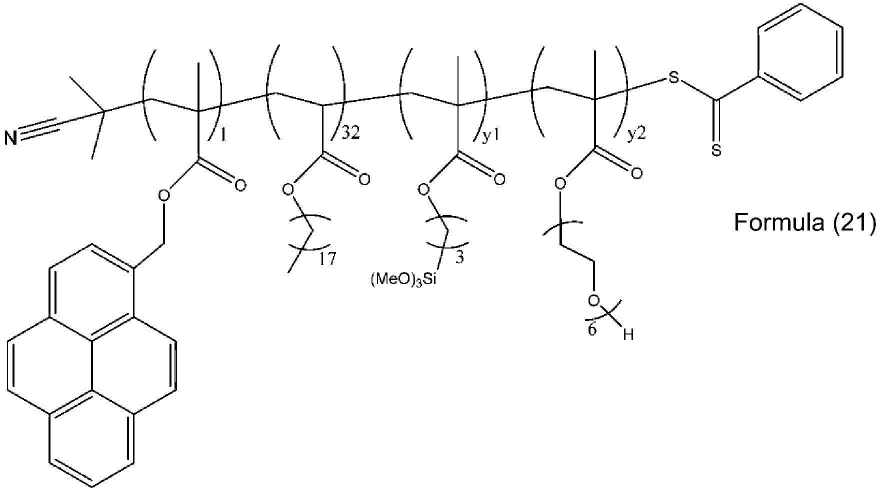

In formula (21), y1 = 5, and y2 = 8. That is, the total number of units of the reactive group-containing units is 13.

### <Example 10>

A polymeric additive represented by formula (22) was obtained in the same manner as in Example 9, except that in Example 9 no 3-(trimethoxysilyl)propyl methacrylate was used and the blending amounts of the respective components were adjusted as shown in Table 2. Details of the resulting polymeric additive are shown in Table 3.

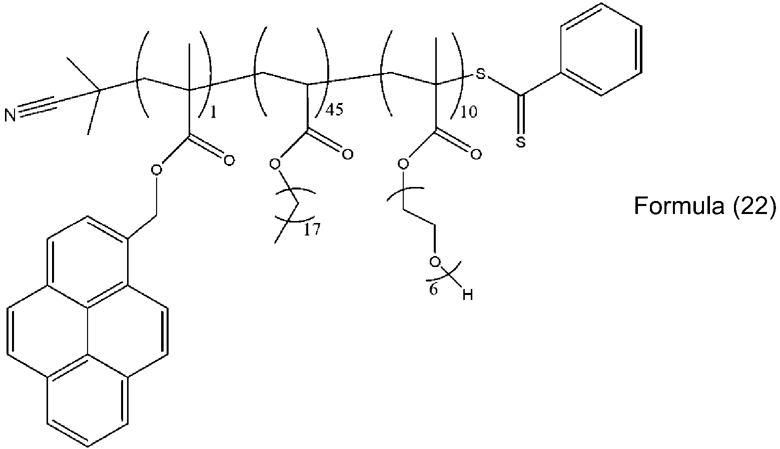

### <Comparative Example 1>

A polymeric additive represented by formula (13) was obtained in the same manner as in Example 1, except that in Example 1 no 1-pyrenylmethyl methacrylate was used and the blending amounts of the respective components were adjusted as shown in Table 2. Details of the resulting polymeric additive are shown in Table 3.

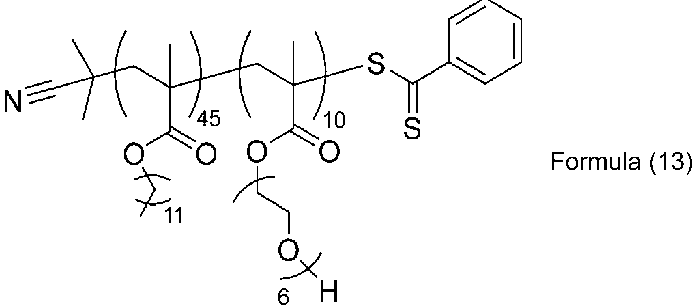

### <Comparative Example 2>

A polymeric additive represented by Formula (14) was obtained in the same manner as in Example 1, except that in Example 1 9-anthrylmethyl methacrylate was used in place of 1-pyrenylmethyl methacrylate and the blending amounts of the respective components were adjusted as shown in Table 2. Details of the resulting polymeric additive are shown in Table 3.

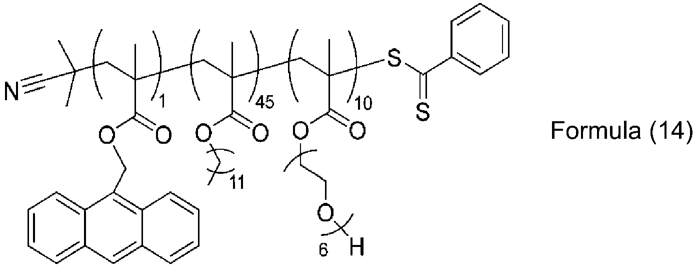

### <Comparative Example 3>

A polymeric additive represented by formula (15) was obtained in the same manner as in Example 1, except that in Example 1 benzyl methacrylate was used in place of 1-pyrenylmethyl methacrylate and the blending amounts of the respective components were adjusted as shown in Table 2. Details of the resulting polymeric additive are shown in Table 3.

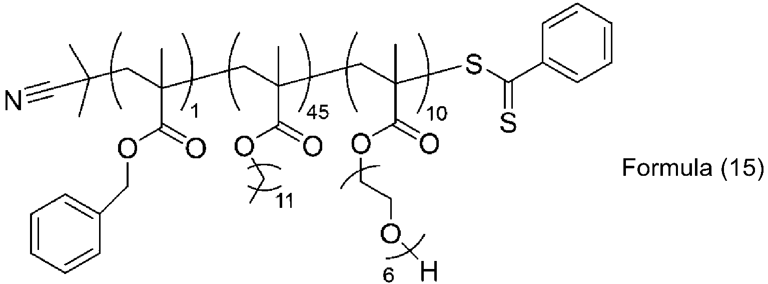

### <Comparative Example 4>

A polymeric additive represented by Formula (16) was obtained in the same manner as in Example 1, except that the blending amounts of the respective components were adjusted as shown in Table 2. Details of the resulting polymeric additive are shown in Table 3.

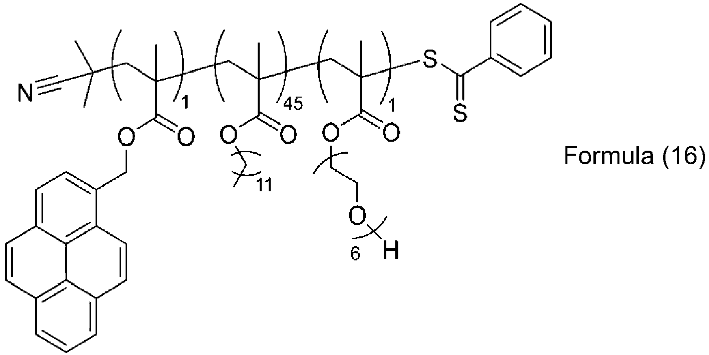

### <Comparative Example 5>

A polymeric additive represented by formula (17) was obtained in the same manner as in Example 1, except that in Example 1 ethyl methacrylate was used in place of dodecyl methacrylate and the blending amounts of the respective components were adjusted as shown in Table 2. Details of the resulting polymeric additive are shown in Table 3.

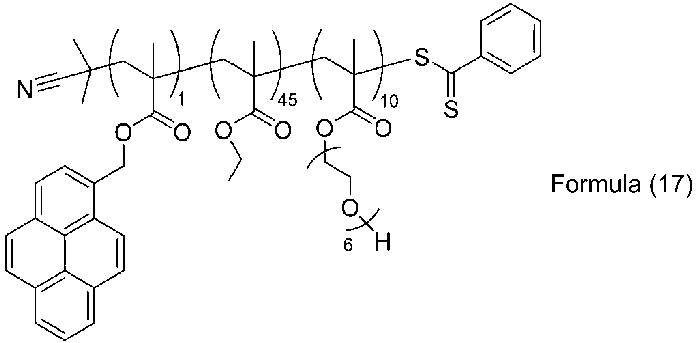

### <Comparative Example 6>

A polymeric additive represented by Formula (18) was obtained in the same manner as in Example 1, except that the blending amounts of the respective components were adjusted as shown in Table 2. Details of the resulting polymeric additive are shown in Table 3.

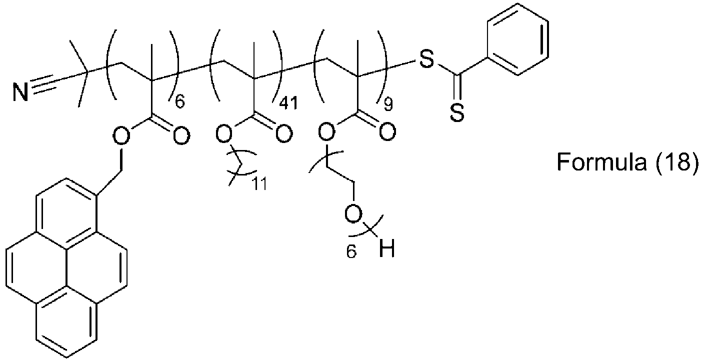

### <Comparative Example 7>

A polymeric additive represented by formula (19) was obtained in the same manner as in Example 1, except that in Example 1 polyethylene glycol methyl ether methacrylate (Mn = 500) was used in place of polyethylene glycol methacrylate (Mn = 360) and the blending amounts of the respective components were adjusted as shown in Table 2. Details of the resulting polymeric additive are shown in Table 3.

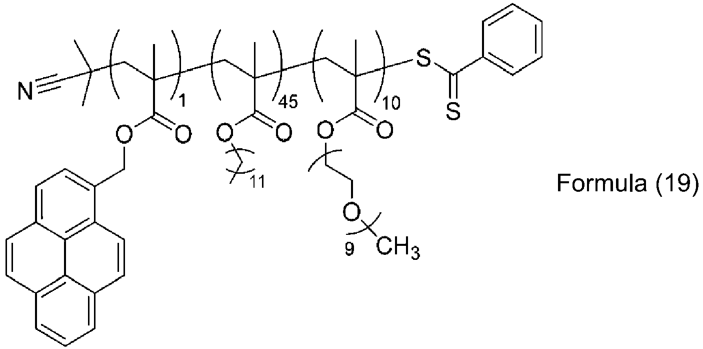

### <Reference Example 1>

The above-described evaluation of dispersibility was performed without using a polymeric additive. That is, the evaluation of dispersibility was performed using only methyl ethyl ketone. The results are shown in Table 3.

**Table 2**

| (unit: g) | Example 1 | Example 2 | Example 3 | Example 4 | Example 5 | Example 6 | Example 7 | Example 8 | Example 9 | Example 10 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|---|---|---|---|---|
| 1-Pyrenylmethyl methacrylate | 0.3158 | | 1.4033 | 0.2113 | 0.25 | 2.0074 | 0.031 | 0.1 | 0.1 | 0.25 | | | | 0.29 | 0.2803 | 1.7 | 0.2499 |
| Dodecyl methacrylate | 11.5324 | 11.5324 | 9.7828 | | 11.647 | 8.4836 | 7.8775 | | | | 11.002 | 10.357 | 9.7461 | 11.054 | | 9.8398 | 9.529 |
| Stearyl acrylate | | | | | | | | 3.8901 | 3.4038 | 9.7252 | | | | | | | |
| Compound represented by formula (6) | | 0.1717 | | | | | | | | | | | | | | | |
| Propyl methacrylate | | | | 6.4559 | | | | | | | | | | | | | |
| 9-Anthrylmethyl methacrylate | | | | | | | | | | | | 0.2501 | | | | | |
| Benzyl methacrylate | | | | | | | | | | | | | 0.1498 | | | | |
| Ethyl methacrylate | | | | | | | | | | | | | | | 4.7897 | | |
| Polyethylene glycol methacrylate (Mn = 360) | 3.6446 | 3.6446 | 3.0285 | 4.0301 | 2.9965 | 2.4038 | 2.4523 | | 0.95888 | 2.3972 | 3.4601 | 3.2571 | 3.0656 | 0.3476 | 3.3574 | 3.0564 | |
| Polyethylene glycol methyl ether methacrylate (Mn = 500) | | | | | | | | | | | | | | | | | 4.162 |
| 2-(Methacryloyloxy)ethyl 1,3-dioxo-1,3-dihydroisobenzofuran-5-carboxylate | | | | | | | | 0.8104 | | | | | | | | | |
| 3-(Trimethoxysilyl)propyl methacrylate | | | | | | | | | 0.37209 | | | | | | | | |
| 2-Cyanopropan-2-yl benzodithioate | 0.1717 | | 0.1489 | 0.1181 | 0.14 | 0.8918 | 0.0174 | 0.1203 | 0.1203 | 0.1437 | 0.1621 | 0.1511 | 0.1422 | 0.1624 | 0.1546 | 0.1587 | 0.1624 |
| 2,2'-Azobis(isobutyronitrile) | 0.0317 | 0.0317 | 0.0275 | 0.023 | 0.026 | 0.1644 | 0.0032 | 0.0224 | 0.0220 | 0.0366 | 0.0282 | 0.0279 | 0.0262 | 0.0301 | 0.0288 | 0.0294 | 0.0301 |
| Toluene | 19.7 | 19.7 | 18.07 | 21.81 | 19.33 | 17.9 | 21.95 | 6.70 | 6.05 | 16.6 | 18.62 | 22.33 | 21.01 | 20.07 | 23.01 | 18.63 | 20.54 |
| Average molecular weight | 15,360 | 15,570 | 16,750 | 15,470 | 19,510 | 5,360 | 99,410 | 14,730 | 14,840 | 15,090 | 15,270 | 15,060 | 15,450 | 20,210 | 9,240 | 15,700 | 16,700 |

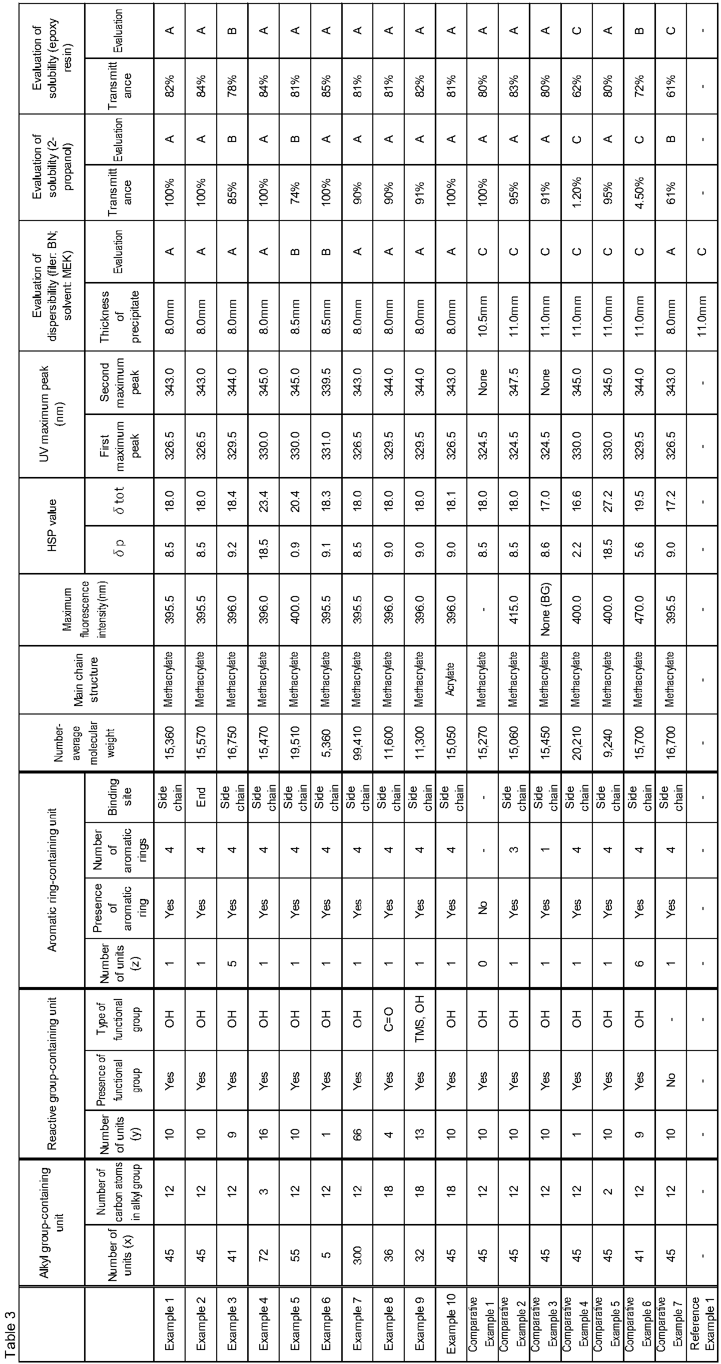

From the results of the Examples, the polymeric additives satisfying the requirements of the present invention exhibited excellent solubility in medium- to high-polarity solvents and resins. In addition, when the polymeric additives of the present invention were used, the dispersibility of π-conjugated fillers in medium- to high-polarity solvents could be enhanced.

In contrast, the polymeric additives of Comparative Examples 1 to 3 and 6 did not exhibit a maximum fluorescence peak in a range of 370 nm or more and 410 nm or less, the polymeric additives of Comparative Examples 4 and 5 were outside the range of a total Hansen solubility parameter δₜₒₜ of 17 or more and 24 or less, and the polymeric additive of Comparative Example 7 did not have a reactive functional group. Therefore, these polymeric additives did not satisfy the requirements of the present invention. These polymeric additives of the Comparative Examples showed poor results in at least one of solubility in medium- to high-polarity solvents, solubility in resins, or dispersibility of π-conjugated fillers in medium- to high-polarity solvents, and were inferior in performance compared with the Examples.

## Claims

1. A polymeric additive comprising:
an aromatic ring in a side chain or at an end of a polymer main chain; and
at least one reactive functional group in a molecular structure thereof,
the polymeric additive having a maximum fluorescence peak in a range of 370 nm or more and 410 nm or less, and
the polymeric additive having a total Hansen solubility parameter δₜₒₜ of 17 or more and 24 or less as represented by the following expression: $δ tot = \sqrt{\left({δ}_{d}^{2}+{δ}_{p}^{2}+{δ}_{h}^{2}\right)}$ wherein δ_{d}, δₚ, and δₕ represent a dispersion term, a polar term and a hydrogen bond term, respectively, of Hansen solubility parameter.

2. The polymeric additive according to claim 1, wherein the polar term δp of the Hansen solubility parameter is 0.5 or more and 19 or less.

3. The polymeric additive according to claim 1 or 2, wherein the aromatic ring comprises a fused-ring compound in which four or more 6-membered rings are fused.

4. The polymeric additive according to claim 3, wherein the number of fused-ring compounds is 1 or more and 5 or less per polymer chain.

5. The polymeric additive according to claim 1 or 2, wherein the reactive functional group comprises any one selected from the group consisting of a hydroxy group, an acid anhydride group, and a trialkoxysilyl group.

6. The polymeric additive according to claim 1 or 2, wherein a number-average molecular weight (Mn) as measured by GPC is 4,000 or more and 100,000 or less.

7. The polymeric additive according to claim 1 or 2, wherein the polymeric additive comprises two maximum peaks of UV absorption in a range of 320 nm or more and 350 nm or less.

8. The polymeric additive according to claim 1 or 2, wherein the polymer main chain comprises (meth)acrylate.

9. The polymeric additive according to claim 1 or 2, wherein the polymeric additive comprises an alkyl group having 1 or more and 22 or less carbon atoms in the molecular structure thereof.

10. A filler-containing composition comprising:
the polymeric additive according to claim 1 or 2;
a filler; and
a matrix that is at least one of a resin or a solvent.

11. The filler-containing composition according to claim 10, wherein the filler is a thermally conductive filler.

12. The filler-containing composition according to claim 10, wherein the resin comprises a curable resin and the curable resin comprises an epoxy compound.
